# EUROPEAN PATENT SPECIFICATION

(11) **EP 0 278 970 B1**
(45) Date of publication and mention of the grant of the patent: **07.04.1993**
(21) Application number: 87905851.9
(22) Date of filing: 20.08.1987
(51) Int. Cl.: C01B 31/30, C01B 31/34, C04B 35/52, C04B 35/56

(54) **PROCESS FOR MAKING TRANSITION METAL CARBIDES**
HERSTELLUNG VON ÜBERGANGS-METALLKARBIDEN
PROCEDE DE PRODUCTION DE CARBURES A BASE DE METAUX DE TRANSITION

(30) Priority: 26.08.1986 US 900592
(43) Date of publication of application: 24.08.1988
(73) Proprietor: SRI INTERNATIONAL, Menlo Park, California 94025-3493 (US)
(72) Inventor: LAINE, Richard, M., Palo Alto, CA 94303 (US)
(74) Representative: Rinuy, Santarelli
(86) International application number: US8702057
(87) International publication number: WO8801603

(56) References cited:
- FR-A- 1 329 628
- FR-A- 1 329 628
- FR-A- 1 359 694
- US-A- 3 061 465
- US-A- 3 529 988
- US-A- 3 865 745
- US-A- 3 880 769
- US-A- 4 333 915
- US-A- 4 333 916
- Kagaku Kojo, Vol. 23, no. 7, issued 1979, S. Yajima "Synthesis of Ceramics Using Organo-metallic Polymers", see. Fig. 1 and related text
- Solid-State Science and Technology, Vol. 122, no. 11 (J. Electrochem. Soc.) issued 1975, Sugiyama et al., "Low Temperature Deposition of Metalic Nitrides by Thermal Decomposition of Organometallic Compounds"
- J. Appl. Chem. of the USSR, Vol. 46 no. 7, issued July 1973 (translation by Consultants Bureau, Plenum Publishing Corporation, NY), Gorgoraki et al., "Pyrolysis of Bisethylbenzenechromium (O)"
- J. Organometal. Chem., Vol. 124, issued 1977 (Lausanne, Netherlands), R.M. Laine et al., "Reactions of (C5H5)W(CO)3H with Dimethylacetylenedicarboxylate. Formation of Dinuclear and Metal Hydride Insertion Products"
- J. Am. Chem. Soc., Vol. 109, issued 1987, G.S. Girolami et al., "Organometallic Route to the Chemical Vapor Deposition of Titanium Carbide Films at Exeptionally Low Temperatures"
- Shunk, Francis A., Constituion of Binary Alloys, Second Supplement, 1969, McGraw-Hill (N.Y.), pp140-172

## Description

### Technical Field

This invention is in the field of transition metal carbides. More specifically it relates to a process for making transition metal carbides by pyrolyzing certain transition metal amides.

### Background

Metal carbides, such as tungsten carbide, are used in making a variety of hard and/or high temperature materials. Metal carbides are made conventionally by blending carbon with metal powder and carburizing the metal at elevated temperatures. This procedure produces a metal carbide powder whose properties (high hardness, high melting) are not amenable to permitting the material to be readily manipulated into other forms such as coatings, fibers, or shaped objects.

Parent PCT patent application No. WO86/06361 addresses the problem of how to readily produce metal carbides in the form of coatings, fibers or shaped objects. It generally describes a procedure for producing the metal carbide by pyrolyzing tractable organometallic precursors in which organic ligands are bonded to the metal. The tractability of the precursor enables it to be placed in the desired form before it is pyrolyzed to the metal carbide. The present invention involves the use of a particular class of organometallics, polynuclear metal amides that contain two or more metal atoms, that were found unexpectedly to be metal carbide precursors. In this regard prior workers reported in J. Electrochem. Soc., (1975) 122:1545-1549 that mononuclear metal dialkylamides which contain one metal atom thermally decomposed in the gas phase to produce metal nitrides. It was expected, therefore, that the polynuclear metal amide precursor would yield metal nitrides rather than metal carbides. It was further found that metal carbides in which the carbon is in excess and is bound covalently to the metal may be produced by pyrolyzing certain metal amides containing two or more metal atoms. Such metal carbides are believed to be novel.

The art directly relating to metal carbides in which there is excess carbon is exemplified by U.S. Patent No. 3,865,745 and Refractory Hard Metals: Borides, Carbides, Nitrides and Silicides, Schwarzkopf, P., et al, MacMillen and Co., New York, (1953). The patent describes the preparation of metal carbide microspheres by heating in the presence of steam microspheres of ion exchange resins that have been pretreated with metal ion solution. The patent indicates that the carbon in the microspheres can be in molar excess depending upon the heating conditions. It is believed that the carbon in this product is not present in the form of a covalently bound species, but is instead present in the form of excess carbon (graphite) in solid solution. Also, in view of the presence of steam in the process, the product is contaminated by oxycarbide to greater or lesser extent depending on the heating conditions. Refractory Hard Metals: Borides, Carbides, Nitrides and Silicides confirms this belief in that it shows a phase diagram for mixtures of W and C which indicates that above W:C atom ratios of 1:1, one obtains WC plus C with the excess carbon being free carbon.

### Disclosure of the Invention

The invention provides a process for making metal carbides by pyrolyzing certain polynuclear metal amides.

The invention process for making a transition metal carbide comprises pyrolyzing a tractable transition metal amide of the formula:

Mₓ(NR¹R²)_{y} (1)

where M is a transition metal, x is an integer and is equal to or greater than 2, R¹ and R² are the same or different and are hydrogen, lower alkyl (1 to 4 carbon atoms), trimethylsilyl or ethylene, with the proviso that both R¹ and R² are not hydrogen, and y is equal to the valence of the Mₓ unit,
under nonoxidizing conditions at a temperature at which a carbon-containing group of the amido group of formula (1) undergoes chemical reaction with a metal atom of the metal amide to form at least one covalent carbon-to-metal bond.

The nonstoichiometric metal carbides are carbides of a transition metal wherein the atom ratio of carbon to metal is greater than 1:1 and the carbon is covalently bound to the metal. The ratio may be stoichiometric or nonstoichiometric.

The advantages of the invention include the following:
(1) Lower temperatures in the preparation of the metal compound or alloy MₐX_{b} wherein M represents the metal or metals, X represents the combining element or elements and the subscripts a and b represent the atomic proportions of M and X;
(2) A simplified procedure:
(3) Greater control over the combining proportions, a and b;
(4) More facile methods of application of MₐX_{b} to end products; and
(5) Potential routes to materials or material morphologies that have heretofore been impossible or difficult to prepare.

### Brief Description of the Drawings

In the drawings:
Figure 1 is an X-ray powder diffraction pattern of the metal carbide product of Example 1, infra; and
Figure 2 is an X-ray powder diffraction pattern of the metal carbide product of Example 2, infra.

### Modes for Carrying Out the Invention

As used herein, the term "transition metal" means an element which has the filling of its outermost shell to 8 electrons interrupted to bring its penultimate shell from 8 to 18 or 32 electrons. The term encompasses elements of atomic number 21 through 29 (scandium through copper), 39 through 47 (yttrium through silver), 57 through 79 (lanthanum through gold) and all elements from atomic number 89 (actinium) on. Preferred transition metals for the purpose of the invention are those of Group VI B of the Periodic Table. Particularly preferred transition metals are tungsten (W) and molybdenum (Mo).

As used herein the term "tractable" means that the designated metal amide is sufficiently soluble, meltable or malleable that it can be formed into desired shapes either by itself, in solution, or melt or mixture with the metal carbide powder, as the case may be, at relatively low temperatures (i.e., below about 200°C).

The metal amide precursors that are used to make the metal carbides are of the general formula:

Mₓ(NR¹R²)_{y} (1)

where M is a transition metal, x is an integer and is equal to or greater than 2, preferably equal to 2, R¹ and R² are the same or different and are hydrogen, lower alkyl (1 to 4 carbon atoms, preferably straight-chain), trimethylsilyl, or ethylene, with the proviso that both R¹ and R² are not hydrogen, and y is an integer equal to the valence of the Mₓ unit. As indicated above, Mₓ is preferably a Group VI A metal dimer, oligomer or polymer and most preferably ditungsten or dimolybdenum. Alkyl radicals represented by R¹ and R² include methyl, ethyl, propyl, isopropyl and butyl. Preferred alkyl radicals are methyl and ethyl. When R¹/R² represent ethylene they form cyclic structures with the metal and nitrogen of the amide.

Examples of preferred metal amides represented by formula (1) are hexakis(methylamido) dichromium, hexakis(dimethylamido) dichromium, hexakis(ethylamido) dichromium, hexakis(diethylamido) dichromium, hexakis(methylethylamido) dichromium, hexakis(propylamido) dichromium, hexakis(isopropylamido) dichromium, hexakis(methylpropylamido) dichromium, hexakis(dipropylamido) dichromium, hexakis(butylamido) dichromium, hexakis(methylamido) ditungsten, hexakis(dimethylamido) ditungsten, hexakis(ethylamido) ditungsten, hexakis(diethylamido) ditungsten, hexakis(methylethylamido) ditungsten, hexakis(propylamido) ditungsten, hexakis(methylpropylamido) ditungsten, hexakis(ethylpropylamido) ditungsten, hexakis(butylamido) ditungsten, hexakis(dibutylamido) ditungsten, hexakis(methylamido) dimolybdenum, hexakis(dimethylamido) dimolybdenum, hexakis(ethylamido) dimolybdenum hexakis(diethylamido) dimolybdenum, hexakis(methylethylamido) dimolybdenum, hexakis(propylamido) dimolybdenum, hexakis(methylpropylamido) dimolybdenum, hexakis(ethylpropylamido) dimolybdenum, hexakis(butylamido) dimolybdenum, hexakis(dibutylamido) dimolybdenum, tetrakis(diamidoethane) dichromium, tetrakis(diamidoethane) ditungsten, and tetrakis(diamidoethane) dimolybdenum.

Examples of other metal amides of formula (1) are hexakis(dimethylamido) discandium, hexakis(dimethylamido) dititanium, hexakis(dimethylamido) divanadium, hexakis(dimethylamido) dimanganese, tetrakis(diethylamido)-bis-(µ-ethylamido) dizirconium, tetrakis(dimethylamido)-bis-(µ-ethylamido) dirhodium, tetrakis-(dimethylamido)-bis-(µ-ethylamido) ditantalum, hexakis(diethylamido)-tris-(µ-trimethylsilylamido) dilanthanum, and hexakis(diethylamido)-tris-(µ-trimethylsilylamido) diactinium.

The metal amide precursors may be prepared from lithium amides and the corresponding metal chlorides or by reaction of a silylamide with a metal chloride or fluoride as is known in the art.

The metal amide precursors are generally soluble in organic solvents such as methylene chloride, pentane, benzene, diphenylether, and acetonitrile or are malleable or meltable solids. Solutions or melts of the amides may, therefore, be applied to substate surfaces by spraying, dipping, or brushing. If the solution or melt is sufficiently viscous and non-volatile, it may be extruded in the form of rods, fibers or other shaped bodies.

The amides are pyrolyzed to metal carbides under nonoxidizing condition, e.g., in the presence of nonoxidizing gases such as nitrogen, ammonia, argon, or the like, at temperatures at which the carbon-containing moiety of the amide (i.e., the alkyl or ethylene group(s)) reacts with the metal to form one or more carbon-to-metal covalent bonds. The particular temperatures used in the pyrolysis will depend upon the precursor involved and will normally range between 100°C and 1000°C, preferably 200°C and 900°C.

The relative amounts of metal, nitrogen, and carbon in the amide are believed to direct the formation of the carbide rather than nitride in the pyrolysis and to affect the atom ratio of carbon to metal in the resulting carbide. In this regard, it is believed that only amides that contain a multiplicity of metal atoms provide precursors for carbides. Through selection of the number of metal atoms and the amount of carbon in the amide, carbides of selected carbon-to-metal atom ratios may be prepared. For instance in the case of hexakis(dimethylamido) ditungsten or dimolybdenum, it was found that the atom ratio of carbon to tungsten/molybdenum in the resulting carbide is in excess and is about 1.4:1 to about 1.7:1, typically approximately 1.5:1. When the ratio is 1.5:1, the carbon-to-metal ratio is believed to be stoichiometric (i.e., W₂C₃ or Mo₂C₃). These carbides may be used in the same applications as are the known stoichiometric carbides, e.g., in making hard/high temperature bodies or coatings, cermets or abrasives.

The following examples further illustrate the invention process. These examples are not intended to limit the scope of the invention in any manner.

### Example 1

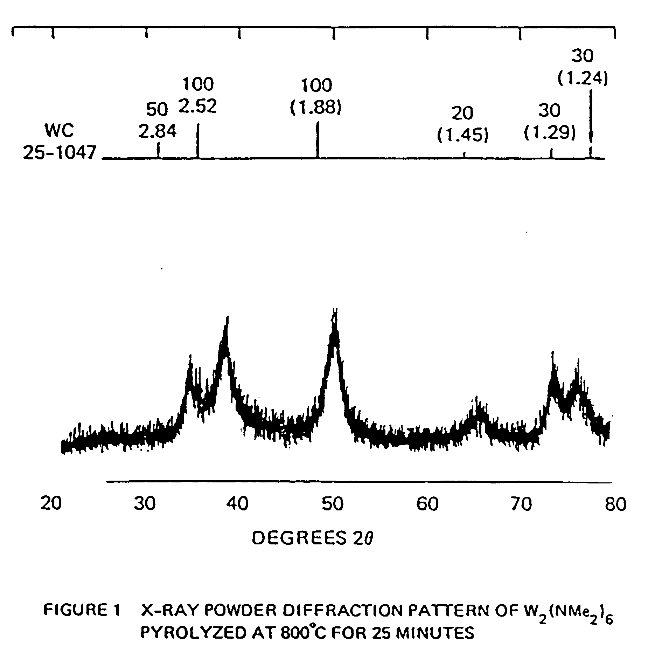

Nickel-coated stainless steel tubes were charged with 0.07 g of hexakis(dimethylamido) ditungsten (W₂(NMe₂)₆) under an argon, nitrogen, or ammonia atmosphere and pyrolyzed at 800°C for 25 minutes. A representative X-ray powder diffraction pattern of the pyrolysis product was made and is shown in Figure 1. This pattern indicates that the product has the crystal structure of WC. Repeated elemental analyses, however, indicate the product to be hexagonal tungsten carbide, WC_{1.5} (W₂C₃). (Found: W, 90.87; C, 8.79; N, 0.39.)

### Example 2

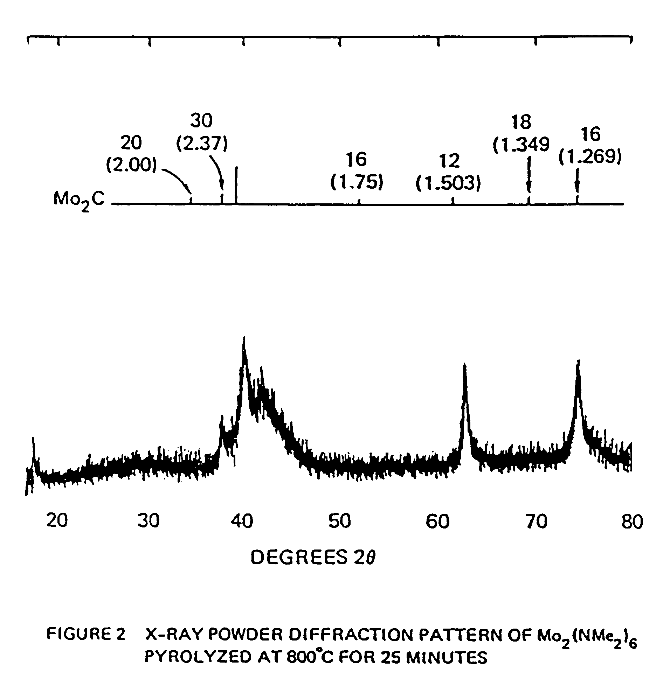

Example 1 was repeated except that 0.07 g of hexakis(dimethylamido) dimolybdenum was used in place of hexakis(dimethylamido) ditungsten. The X-ray powder diffraction pattern of the pyrolysis product of this example is shown in Figure 2. Although this pattern indicates the product has the crystal structure of Mo₂C, repeated elemental analysis show the product to be molybdenum carbide, MoC_{1.6} (Mo₂C₃). (Found: Mo, 83.14; C, 16.72; N, 0.34.)

Modifications of the above-described modes for carrying out the invention that are obvious to those of skill in the art are intended to be within the scope of the following claims.

## Claims

1. A process for making a transition metal carbide comprising pyrolyzing a tractable transition metal amide of the formula
Mₓ(NR¹R²)_{y}
where M is a transition metal selected from the group consisting of Sc, Ti, V, Cr, Mn, Fe, Co, Ni, Y, Zr, Nb, Mo, Tc, Ru, Rh, Pd, Hf, Ta, W, Re, Os, Ir, Pt and all elements from atomic number 89 on, x is an integer and is equal to or greater than 2, R¹ and R² are the same or different and are hydrogen, lower alkyl, trimethylsilyl, or ethylene, with the proviso that both R¹ and R² are not hydrogen, and y is an integer equal to the valence of the Mₓ unit,
under nonoxidizing conditions at a temperature at which a carbon-containing group of the amido group of the amide undergoes chemical reaction with a metal atom of the amide to form at least one covalent carbon-to-metal bond.

2. The process of claim 1 wherein M is a transition metal selected from the group consisting of chromium, tungsten and molybdenum.

3. The process of claim 1 wherein M is tungsten or molybdenum.

4. The process of claim 2 wherein R¹ and R² are the same or different and are methyl or ethyl.

5. The process of claim 2 wherein R¹ and R² are methyl.

6. The process of claim 1 wherein the temperature is in the range of 100°C to 1000°C.

7. The process of claim 3 wherein the temperature is in the range of 200°C and 900°C.

8. The process of claim 4 wherein the temperature is in the range of 200°C and 900°C.

9. The process of claim 5 wherein the temperature is in the range of 200°C and 900°C.

## Patentansprüche

1. Verfahren zur Herstellung eines Übergangsmetallcarbids, das aufweist: Pyrolisieren eines leicht handhabbaren Übergangsmetallamids der Formel
Mₓ(NR¹R²)_{y}
wobei M = ein Übergangsmetall, das aus der Gruppe ausgewählt ist, die aus Sc, Ti, V, Cr, Mn, Fe, Co, Ni, Y, Zr, Nb, Mo, Tc, Ru, Rh, Pd, Hf, Ta, W, Re, Os, Ir, Pt und allen Elementen ab der Ordnungszahl 89 besteht, x = eine ganze Zahl, die gleich oder größer als 2 ist, R¹ und R² = gleich oder verschieden und Wasserstoff, niedriges Alkyl, Trimethylsilyl oder Ethylen, mit der Maßgabe, daß nicht sowohl R¹ als auch R² Wasserstoff sind, und y = eine ganze Zahl, die gleich der Wertigkeit der Mₓ-Einheit ist,
unter nichtoxidierenden Bedingungen bei einer Temperatur, bei der eine kohlenstoffhaltige Gruppe der Amidogruppe des Amids eine chemische Reaktion mit einem Metallatom des Amids erfährt, um wenigstens eine kovalente Kohlenstoff-Metall-Bindung zu bilden.

2. Verfahren nach Anspruch 1, wobei M ein Übergangsmetall ist, das aus der Gruppe ausgewählt ist, die aus Chrom, Wolfram und Molybdän besteht.

3. Verfahren nach Anspruch 1, wobei M Wolfram oder Molybdän ist.

4. Verfahren nach Anspruch 2, wobei R¹ und R² gleich oder verschieden und Methyl oder Ethyl sind.

5. Verfahren nach Anspruch 2, wobei R¹ und R² Methyl sind.

6. Verfahren nach Anspruch 1, wobei die Temperatur in dem Bereich von 100 °C bis 1000 °C liegt.

7. Verfahren nach Anspruch 3, wobei die Temperatur in dem Bereich von 200 °C bis 900 °C liegt.

8. Verfahren nach Anspruch 4, wobei die Temperatur in dem Bereich von 200 °C bis 900 °C liegt.

9. Verfahren nach Anspruch 5, wobei die Temperatur in dem Bereich von 200 °C bis 900 °C liegt.

## Revendications

1. Procédé de production d'un carbure de métal de transition, consistant à pyrolyser un amide de métal de transition façonnable répondant à la formule
Mₓ(NR¹R²)_{y}
dans laquelle M représente un métal de transition choisi dans le groupe comprenant Sc, Ti, V, Cr, Mn, Fe, Co, Ni, Y, Zr, Nb, Mo, Tc, Ru, Rh, Pd, Hf, Ta, W, Re, Os, Ir, Pt et tous les éléments à partir du numéro atomique 89, x représente un nombre entier et est égal ou supérieur à 2, R¹ et R² sont identiques ou différents et représentent l'hydrogène, des groupes alkyle inférieur, triméthylsilyle ou éthylène, sous réserve que R¹ et R² ne représentent pas l'un et l'autre l'hydrogène, et y représente un nombre entier égal à la valence du motif Mₓ,
dans des conditions non oxydantes à une température à laquelle un groupe contenant du carbone du groupe amido de l'amide subit une réaction chimique avec un atome métallique de l'amide pour former au moins une liaison carbone-métal covalente.

2. Procédé suivant la revendication 1, dans lequel M représente un métal de transition choisi dans le groupe comprenant le chrome, le tungstène et le molybdène.

3. Procédé suivant la revendication 1, dans lequel M représente le tungstène ou le molybdène.

4. Procédé suivant la revendication 2, dans lequel R¹ et R² sont identiques et différents et représentent des groupes méthyle ou éthyle.

5. Procédé suivant la revendication 2, dans lequel R¹ et R² représentent des groupes méthyle.

6. Procédé suivant la revendication 1, dans lequel la température est comprise dans l'intervalle de 100°C à 1000°C.

7. Procédé suivant la revendication 3, dans lequel la température est comprise dans l'intervalle de 200°C à 900°C.

8. Procédé suivant la revendication 4, dans lequel la température est comprise dans l'intervalle de 200°C à 900°C.

9. Procédé suivant la revendication 5, dans lequel la température est comprise dans l'intervalle de 200°C à 900°C.
